(19) **Europäisches Patentamt / European Patent Office / Office européen des brevets**

(11) **EP 4 716 105 A1**

(12) **EUROPEAN PATENT APPLICATION**
published in accordance with Art. 153(4) EPC

(43) Date of publication:
**25.03.2026 Bulletin 2026/13**

(21) Application number: **24830911.4**

(22) Date of filing: **27.06.2024**

(51) International Patent Classification (IPC):
*H04B 7/0413* (2017.01)

(52) Cooperative Patent Classification (CPC):
**H04B 7/0413; H04B 7/0456; H04B 7/06;
H04L 1/06; H04L 5/00**

(86) International application number:
**PCT/CN2024/102074**

(87) International publication number:
**WO 2025/002278 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 CN 202310798320**

(71) Applicant: **Huawei Technologies Co., Ltd.
Shenzhen, Guangdong 518129 (CN)**

(72) Inventors:
• **YE, Chencheng
  Shenzhen, Guangdong 518129 (CN)**
• **YUAN, Yiling
  Shenzhen, Guangdong 518129 (CN)**
• **WANG, Xiaohan
  Shenzhen, Guangdong 518129 (CN)**
• **JIN, Huangping
  Shenzhen, Guangdong 518129 (CN)**

(74) Representative: **Gill Jennings & Every LLP
The Broadgate Tower
20 Primrose Street
London EC2A 2ES (GB)**

(54) **CHANNEL STATE INFORMATION DETERMINATION METHOD AND APPARATUS**

(57) A channel state information determining method and apparatus are provided, and relate to the wireless communication field. In the method, a network device sends at least two reference signals including a first reference signal and a second reference signal, and receives first information. The first information indicates that a part or all of information in CSI corresponding to the second reference signal is determined based on the first reference signal. A sending periodicity of the first reference signal is less than a sending periodicity of the second reference signal. According to the foregoing design, the network device can be enabled to efficiently obtain the CSI.

Step 200: The network device sends at least two reference signals

Step 210: The terminal determines first information based on the at least two reference signals

Step 220: The terminal device sends the first information

FIG. 2

**Description**

CROSS-REFERENCE TO RELATED APPLICATIONS

This application claims priority to Chinese Patent Application No. 202310798320.5, filed with the China National Intellectual Property Administration on June 30, 2023 and entitled "CHANNEL STATE INFORMATION DETERMINING METHOD AND APPARATUS", which is incorporated herein by reference in its entirety.

TECHNICAL FIELD

This application relates to the field of wireless communication technologies, and in particular, to a channel state information determining method and an apparatus.

BACKGROUND

Currently, the application of a massive multiple-input multiple-output (Massive multiple-input multiple-output, Massive MIMO) technology plays a crucial role in improving spectrum efficiency of a system. When the MIMO technology is used, before sending data to a terminal, a base station needs to precode the data based on channel state information (channel state information, CSI) reported by the terminal to the base station.

A basic process of CSI reporting between the base station and the terminal is as follows: The base station needs to first send signaling used for notifying a channel measurement configuration, and notifies the terminal of a time period and behavior for channel measurement; then the base station sends a pilot to the terminal, where the pilot is used for channel measurement; the terminal performs measurement based on the pilot sent by the base station, performs calculation to obtain final CSI, and reports the CSI to the base station; and the base station then precodes the data based on the CSI reported by the UE and sends precoded data.

The base station may configure a plurality of pilots, and how to improve efficiency of updating the CSI by the terminal based on the pilot is a problem worthy of attention.

SUMMARY

This application provides a channel state information determining method and an apparatus, to enable a terminal to efficiently update and report CSI.

According to a first aspect, this application provides a channel state information determining method. The method may be performed by a network device or a module (for example, a chip) in a network device. The method includes: sending at least two reference signals; and receiving first information. The first information indicates that a part or all of information in channel state information CSI corresponding to a second reference signal is determined based on a first reference signal, the first reference signal and the second reference signal belong to the at least two reference signals, and a sending periodicity of the first reference signal is less than a sending periodicity of the second reference signal.

According to the foregoing method, after sending the at least two reference signals, the network device may receive the first information. When the first information indicates that the part or all of the information in the CSI corresponding to the second reference signal can be determined based on the first reference signal, the network device may be enabled to schedule, based on the sending periodicity of the first reference signal after receiving the first information, a terminal to report the part or all of the information in the CSI corresponding to the second reference signal, and does not need to wait for sending the second reference signal each time before scheduling the terminal to report updated CSI corresponding to the second reference signal. Therefore, according to the foregoing method, the network device can be enabled to obtain the CSI more efficiently. Further, because the sending periodicity of the first reference signal is less than the sending periodicity of the second reference signal, the network device obtains, in time, the part or all of the information in the CSI corresponding to the second reference signal, so that aging of the CSI corresponding to the second reference signal can also be alleviated, and system performance is improved.

In a possible design, after the first information is received, the part or all of the information in the CSI corresponding to the second reference signal is received based on a third periodicity. The third periodicity is greater than or equal to a first periodicity and is less than a second periodicity. The first periodicity is the sending periodicity of the first reference signal or a CSI reporting periodicity in a CSI reporting configuration of the first reference signal, and the second periodicity is a CSI reporting periodicity in a CSI reporting configuration of the second reference signal.

According to the foregoing design, a reporting periodicity of the part or all of the information in the CSI corresponding to the second reference signal can be shortened, thereby alleviating aging of the CSI corresponding to the second reference signal.

In a possible design, the CSI reporting configuration of the second reference signal further includes the third periodicity.

In a possible design, the first information further indicates the third periodicity, or a difference between the third periodicity and the first periodicity, or a difference between the third periodicity and the second periodicity.

In a possible design, after the first information is received, a part of information that is in the CSI corresponding to the second reference signal and that is not indicated by the first information is received based on the second periodicity.

In a possible design, when the CSI corresponding to the second reference signal is reported aperiodically, after the first information is received, the part or all of the information in the CSI corresponding to the second reference signal is received at least twice. Time points of the at least two receptions are all between time points of two adjacent times of sending of the second reference signal, and the part or all of the information in the CSI corresponding to the second reference signal differs in the at least two receptions.

According to the foregoing design, the network device may schedule, based on the sending periodicity of the first reference signal, a terminal to report the part or all of the information in the CSI corresponding to the second reference signal, and does not need to wait for sending the second reference signal each time before scheduling the terminal to report updated CSI corresponding to the second reference signal. In this way, the part or all of the information in the CSI corresponding to the second reference signal can be obtained in time, thereby alleviating aging of the CSI corresponding to the second reference signal.

In a possible design, when the first information indicates a part of information in the CSI corresponding to the second reference signal, the first information further includes an identifier of the part of the information in the CSI corresponding to the second reference signal. The part of the information in the CSI corresponding to the second reference signal includes at least one of channel quality information CQI, a precoding matrix indicator PMI, or a rank indicator RI.

In a possible design, before the at least two reference signals are sent, configuration information of the at least two reference signals is sent. The configuration information of the at least two reference signals includes the sending periodicity of the first reference signal and the sending periodicity of the second reference signal.

In a possible design, before the first information is received, second information is sent. The second information indicates a terminal to feed back the first information.

According to the foregoing design, the terminal may be indicated to determine whether a part or all of information in CSI corresponding to a reference signal can be determined based on another reference signal.

In a possible design, an absolute value of a difference between a sending time point of the first reference signal and a sending time point of the second reference signal is less than or equal to a first preset threshold.

In a possible design, an absolute value of a difference between a frequency of the first reference signal and a frequency of the second reference signal is less than or equal to a second preset threshold.

In a possible design, the frequency of the first reference signal is less than the frequency of the second reference signal.

According to the foregoing design, a part or all of information in CSI corresponding to a high-frequency reference signal can be determined based on a low-frequency reference signal.

In a possible design, a correlation coefficient of the first reference signal and the second reference signal is received.

According to a second aspect, this application provides a channel state information determining method. The method may be performed by a terminal or a module (for example, a chip) in a terminal. The method includes: receiving at least two reference signals; determining first information based on the at least two reference signals, where the first information indicates that a part or all of information in CSI corresponding to a second reference signal is determined based on a first reference signal, and the first reference signal and the second reference signal belong to the at least two reference signals; and sending the first information.

According to the foregoing method, after the terminal receives the at least two reference signals, if the terminal determines that, the part or all of the information in the CSI corresponding to the second reference signal can be determined based on the first reference signal, the terminal sends the first information to a network device. Because different reference signals are usually used for measuring CSI corresponding to different antenna ports, if the terminal determines that the part or all of the information in the CSI corresponding to the second reference signal can be determined based on the first reference signal, the terminal may be enabled to update, by measuring only the first reference signal, CSI of an antenna port corresponding to the first reference signal and a part or all of CSI of an antenna port corresponding to the second reference signal. In other words, the terminal does not need to update the CSI corresponding to the second reference signal each time after measuring the second reference signal. Therefore, according to the foregoing method, the terminal can be enabled to update and report the CSI more efficiently, so that efficiency of updating the CSI by the terminal based on the reference signal is improved, and the network device can schedule CSI reporting more frequently, thereby alleviating aging of the CSI corresponding to the second reference signal, and improving system performance.

In a possible design, after the first information is sent, the part or all of the information in the CSI corresponding to the second reference signal is sent based on a third periodicity. The third periodicity is greater than or equal to a first periodicity and is less than a second periodicity. The first periodicity is a sending periodicity of the first reference signal or a CSI reporting periodicity in a CSI reporting configuration of the first reference signal, and the second periodicity is a CSI reporting periodicity in a CSI reporting configuration of the second reference signal.

In a possible design, the CSI reporting configuration of the second reference signal further includes the third periodicity.

In a possible design, the first information further indicates the third periodicity, or a difference between the third periodicity and the first periodicity.

In a possible design, after the first information is sent, a part of information that is in the CSI corresponding to the second reference signal and that is not indicated by the first information is sent based on the second periodicity.

In a possible design, when the CSI corresponding to the second reference signal is reported aperiodically, after the first information is sent, the part or all of the information in the CSI corresponding to the second reference signal is sent at least twice. Time points of the at least two times of sending are all between time points of two adjacent times of sending of the second reference signal, and the part or all of the information in the CSI corresponding to the second reference signal differs in the at least two times of sending.

In a possible design, when the first information indicates a part of information in the CSI corresponding to the second reference signal, the first information further includes an identifier of the part of the information in the CSI corresponding to the second reference signal. The part of the information in the CSI corresponding to the second reference signal includes at least one of CQI, a PMI, or a RI.

In a possible design, before the at least two reference signals are received, configuration information of the at least two reference signals is received. The configuration information of the at least two reference signals includes the sending periodicity of the first reference signal and a sending periodicity of the second reference signal.

In a possible design, before the first information is sent, second information is received. The second information indicates the terminal to feed back the first information.

In a possible design, an absolute value of a difference between a sending time point of the first reference signal and a sending time point of the second reference signal is less than or equal to a first preset threshold.

In a possible design, an absolute value of a difference between a frequency of the first reference signal and a frequency of the second reference signal is less than or equal to a second preset threshold.

In a possible design, the frequency of the first reference signal is less than the frequency of the second reference signal.

According to a third aspect, this application provides a communication apparatus. The apparatus includes a processing unit and a transceiver unit. The processing unit invokes the transceiver unit to send at least two reference signals and receive first information. The first information indicates that a part or all of the information in CSI corresponding to a second reference signal is determined based on a first reference signal, the first reference signal and the second reference signal belong to the at least two reference signals, and a sending periodicity of the first reference signal is less than a sending periodicity of the second reference signal.

In a possible design, the transceiver unit is configured to receive, based on a third periodicity after receiving the first information, the part or all of the information in the CSI corresponding to the second reference signal. The third periodicity is greater than or equal to a first periodicity and is less than a second periodicity. The first periodicity is the sending periodicity of the first reference signal or a CSI reporting periodicity in a CSI reporting configuration of the first reference signal, and the second periodicity is a CSI reporting periodicity in a CSI reporting configuration of the second reference signal.

In a possible design, the CSI reporting configuration of the second reference signal further includes the third periodicity.

In a possible design, the first information further indicates the third periodicity, or a difference between the third periodicity and the first periodicity.

In a possible design, the transceiver unit is configured to receive, based on the second periodicity after receiving the first information, a part of information that is in the CSI corresponding to the second reference signal and that is not indicated by the first information.

In a possible design, the transceiver unit is configured to: when the CSI corresponding to the second reference signal is reported aperiodically, receive, after receiving the first information, the part or all of the information in the CSI corresponding to the second reference signal at least twice. Time points of the at least two receptions are all between time points of two adjacent times of sending of the second reference signal, and the part or all of the information in the CSI corresponding to the second reference signal differs in the at least two receptions.

In a possible design, when the first information indicates a part of information in the CSI corresponding to the second reference signal, the first information further includes an identifier of the part of the information in the CSI corresponding to the second reference signal. The part of the information in the CSI corresponding to the second reference signal includes at least one of CQI, a PMI, or a RI.

In a possible design, the transceiver unit is configured to send configuration information of the at least two reference signals before sending the at least two reference signals. The configuration information of the at least two reference signals includes the sending periodicity of the first reference signal and the sending periodicity of the second reference signal.

In a possible design, the transceiver unit is configured to send second information before receiving the first information. The second information indicates a terminal to feed back the first information.

In a possible design, an absolute value of a difference between a sending time point of the first reference signal and a sending time point of the second reference signal is less than or equal to a first preset threshold.

In a possible design, an absolute value of a difference between a frequency of the first reference signal and a frequency of the second reference signal is less than or equal to a second preset threshold.

In a possible design, the frequency of the first reference signal is less than the frequency of the second reference signal.

According to a fourth aspect, this application provides a communication apparatus. The apparatus includes a processing unit and a transceiver unit. The transceiver unit is configured to receive at least two reference signals. The processing unit is configured to determine first information based on the at least two reference signals. The first information indicates that a part or all of information in CSI corresponding to a second reference signal is determined based on a first reference signal, and the first reference signal and the second reference signal belong to the at least two reference signals. The transceiver unit is configured to send the first information.

In a possible design, the transceiver unit is configured to send, based on a third periodicity after sending the first information, the part or all of the information in the CSI corresponding to the second reference signal. The third periodicity is greater than or equal to a first periodicity and is less than a second periodicity. The first periodicity is a sending periodicity of the first reference signal or a CSI reporting periodicity in a CSI reporting configuration of the first reference signal, and the second periodicity is a CSI reporting periodicity in a CSI reporting configuration of the second reference signal.

In a possible design, the CSI reporting configuration of the second reference signal further includes the third periodicity.

In a possible design, the first information further indicates the third periodicity, or a difference between the third periodicity and the first periodicity.

In a possible design, the transceiver unit is configured to send, based on the second periodicity after sending the first information, a part of information that is in the CSI corresponding to the second reference signal and that is not indicated by the first information.

In a possible design, the transceiver unit is configured to: when the CSI corresponding to the second reference signal is reported aperiodically, send, after sending the first information, the part or all of the information in the CSI corresponding to the second reference signal at least twice. Time points of the at least two times of sending are all between time points of two adjacent times of sending of the second reference signal, and the part or all of the information in the CSI corresponding to the second reference signal differs in the at least two times of sending.

In a possible design, when the first information indicates a part of information in the CSI corresponding to the second reference signal, the first information further includes an identifier of the part of the information in the CSI corresponding to the second reference signal. The part of the information in the CSI corresponding to the second reference signal includes at least one of CQI, a PMI, or a RI.

In a possible design, the transceiver unit is configured to receive configuration information of the at least two reference signals before receiving the at least two reference signals. The configuration information of the at least two reference signals includes the sending periodicity of the first reference signal and a sending periodicity of the second reference signal.

In a possible design, the transceiver unit is configured to receive second information before sending the first information. The second information indicates a terminal to feed back the first information.

In a possible design, an absolute value of a difference between a sending time point of the first reference signal and a sending time point of the second reference signal is less than or equal to a first preset threshold.

In a possible design, an absolute value of a difference between a frequency of the first reference signal and a frequency of the second reference signal is less than or equal to a second preset threshold.

In a possible design, the frequency of the first reference signal is less than the frequency of the second reference signal.

According to a fifth aspect, this application provides a communication apparatus. The apparatus may be used in a terminal device or a network device, and the apparatus includes units configured to perform the method according to any one of the foregoing aspects.

According to a sixth aspect, this application provides a communication device, including at least one processing element and at least one storage element. The at least one storage element is configured to store a program and data. The at least one processing element is configured to read and execute the program and the data that are stored in the storage element, so that the method provided in any one of the foregoing aspects of this application is implemented.

According to a seventh aspect, this application further provides a computer program. When the computer program runs on a computer, the computer is caused to perform the method according to any one of the foregoing aspects.

According to an eighth aspect, this application provides a communication apparatus. The apparatus includes an interface circuit. The interface circuit is configured to provide a program or input and/or output of instructions for at least one processor. The at least one processor is configured to execute the program or the instructions, so that the communication apparatus can implement the method according to any one of the foregoing aspects.

In a possible manner, the communication apparatus includes the at least one processor.

According to a ninth aspect, this application provides a computer storage medium. The storage medium stores a software program, and when the software program is read and executed by one or more processors, the method according to any one of the foregoing aspects may be implemented.

According to a tenth aspect, this application provides a computer program product including instructions. When the instructions are run on a computer, the computer is caused to perform the method in any one of the foregoing aspects.

According to an eleventh aspect, a chip system is provided. The chip system includes at least one chip and a memory. The at least one chip is configured to read and execute a program stored in the memory, to implement the method according to any one of the first aspect.

According to a twelfth aspect, a communication system is provided. The system includes at least one terminal and a network device. The terminal performs the method according to any one of the first aspect, and the network device performs the method according to any one of the second aspect.

In this application, based on the implementations provided in the foregoing aspects, the implementations may be further combined to provide more implementations.

BRIEF DESCRIPTION OF DRAWINGS

FIG. 1 is a diagram of an architecture of a mobile communication system to which an embodiment of this application is applied;
FIG. 2 is an overview flowchart of a channel state information determining method according to this application;
FIG. 3 is a diagram of aperiodic CSI reporting according to this application;
FIG. 4 is a diagram of aperiodic CSI reporting and periodic CSI reporting according to this application;
FIG. 5 is a diagram of a structure of a communication apparatus according to this application; and
FIG. 6 is a diagram of a structure of another communication apparatus according to this application.

DESCRIPTION OF EMBODIMENTS

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR) system, a communication system used in the future or another similar system, or the like.

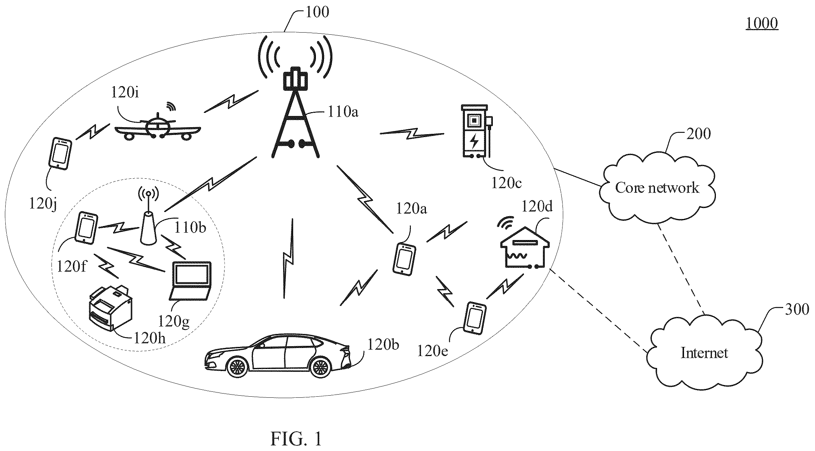

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or a function of the core network device and a logical function of the radio access network device are integrated into a same physical device, or partial functions of the core network device and partial functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein implements functions of the radio resource control protocol and the packet data convergence protocol (packet data convergence protocol, PDCP) of the base station, and may further implement a function of the service data adaptation protocol (service data adaptation protocol, SDAP). The DU completes functions of a radio link control layer and a medium access control (medium access control, MAC) layer of the base station, and may further complete a function of a part or all of a physical layer. For specific descriptions of the foregoing protocol layers, reference may be made to technical specifications related to the 3rd generation partnership project (3rd generation partnership project, 3GPP). The radio access network device may be a macro base station (for example, 110a in FIG. 1), may be a micro base station or an indoor station (for example, 110b in FIG. 1), or may be a relay node, a donor node, or the like. A specific technology and a specific device form that are used by the radio access network device are not limited in embodiments of this application. For ease of description, the following provides descriptions by using an example in which the network device is a radio access network device.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at fixed locations, or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal 120j that accesses the radio access network 100 via 120i, the uncrewed aerial vehicle 120i is a network device. However, for the network device 110a, 120i is a terminal. In other words, 110a and 120i communicate with each other according to a radio air interface protocol. Certainly, 110a and 120i may alternatively communicate with each other according to an interface protocol between network devices. In this case, compared with 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, smart transportation, and smart city. The function of the terminal may alternatively be performed by a module (for example, a chip or a modem) in the terminal, or may be performed by an apparatus including the function of the terminal.

In embodiments of this application, the network device sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighbor cell.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely examples of a downlink data channel, a downlink control channel, an uplink control channel, and an uplink data channel. In different systems and different scenarios, a data channel and a control channel may have different names. This is not limited in embodiments of this application.

Based on a network system architecture shown in FIG. 1 and content described in the foregoing related technologies, descriptions are provided by using an example in which a new channel state information determining method provided in embodiments of this application is performed by a network device and a terminal. For example, the network device may be the access network device 110a or the access network device 110b in FIG. 1. The terminal may be any terminal 120 shown in the foregoing FIG. 1. In addition, it should be understood that the network device may be alternatively replaced with a communication apparatus having a function of the network device, or a chip, a unit, or a module in a communication apparatus having a function of the network device, and the terminal may be alternatively replaced with a communication apparatus having a function of the terminal, or a chip, a unit, or a module in a communication apparatus having a function of the terminal.

In a communication system, a pilot may also be referred to as a reference signal (reference signal, RS), and is a signal that is provided by a transmit end for a receive end for channel estimation or channel detection and that is known by both the transmit end and the receive end. Reference signals are classified into uplink reference signals and downlink reference signals. Unless otherwise specified, the reference signal in this application is a downlink reference signal. For example, the downlink reference signal may be a channel state information-reference signal (channel state information-reference signal, CSI-RS).

In this application, the network device may send configuration information of at least two reference signals. For example, the at least two reference signals may be CSI-RSs. Before sending the at least two reference signals (that is, the following step 200), the network device sends the configuration information of the at least two reference signals by using CSI-ResourceConfig configured at a radio resource control (radio resource control, RRC) layer.

The configuration information of the at least two reference signals may include a measurement configuration of each of the at least two reference signals, and the measurement configuration of each reference signal may include resource mapping (resourceMapping), and a periodicity and offset (periodicityAndOffset) of the reference signal. The resource mapping includes a frequency domain position (frequencyDomainAllocation) in a resource block (resource block, RB), a time domain start symbol position (firstOFDMSymbolInTimeDomain), a code division multiplexing type (cdm-Type), frequency domain density (density), a frequency domain bandwidth (freqBand), and the like. The periodicity and offset includes a sending periodicity (which may also be referred to as a reference signal periodicity) and an offset (which may also be referred to as a slot offset) of the reference signal. The measurement configuration of each reference signal may also be referred to as a channel measurement configuration of each reference signal.

For example, the configuration information of the at least two reference signals may include a sending periodicity and a slot offset of a first reference signal, and a sending periodicity and a slot offset of a second reference signal. The first reference signal and the second reference signal belong to the at least two reference signals.

It may be understood that, currently, the sending periodicity and the offset of the reference signal that are included in the periodicity and offset are all described in a unit of a slot. For example, the periodicity of the reference signal includes N slots, and the slot offset is M slots, where N and M are positive integers. With evolution of technologies, the sending periodicity and the offset of the reference signal that are included in the periodicity and offset may be further described in a unit of another time unit, for example, a subframe or a symbol. This is not limited in this application. In the following, descriptions of the sending periodicity and the offset of the reference signal in the unit of a slot are merely examples, and do not constitute a limitation on this application. The "slot" in the following may be replaced with a "time unit".

In addition, in a possible implementation, the configuration information of the at least two reference signals may further include a CSI reporting configuration of each of the at least two reference signals. The CSI reporting configuration of each reference signal may indicate that CSI corresponding to the reference signal is reported periodically or reported aperiodically. The CSI reporting configuration of each reference signal may also be referred to as a CSI feedback configuration of each reference signal.

It may be understood that the CSI reporting configuration of each reference signal and measurement configuration information of the reference signal may be sent together or separately. This is not limited in this application.

In a possible implementation, the CSI reporting configuration of the reference signal may further include one or more CSI reporting periodicities, and the CSI reporting periodicity may also be referred to as a CSI feedback periodicity, or referred to as a reporting periodicity or a feedback periodicity for short.

For example, there may be specifically the following two cases for a quantity of CSI reporting periodicities included in the CSI reporting configuration of the reference signal.

Case A: When the CSI reporting configuration of the reference signal includes one CSI reporting periodicity, the CSI reporting periodicity is greater than or equal to a sending periodicity of the reference signal.

For example, it is assumed that a sending periodicity of a reference signal A is five slots, if a CSI reporting configuration of the reference signal A includes one CSI reporting periodicity, the CSI reporting periodicity is greater than or equal to five slots.

For another example, it is assumed that a sending periodicity of a reference signal B is 20 slots, if a CSI reporting configuration of the reference signal B includes one CSI reporting periodicity, the CSI reporting periodicity is greater than or equal to 20 slots.

Case B: When the CSI reporting configuration of the reference signal includes a plurality of CSI reporting periodicities, there is a CSI reporting periodicity that is greater than or equal to the sending periodicity of the reference signal in the plurality of CSI reporting periodicities. For example, a quantity of CSI reporting periodicities that are greater than or equal to the sending periodicity of the reference signal is generally 1, and the CSI reporting periodicity is a default CSI reporting periodicity.

Optionally, there may be a CSI reporting periodicity less than the sending periodicity of the reference signal in the plurality of CSI reporting periodicities. For an application scenario of the CSI reporting periodicity less than the sending periodicity of the reference signal, refer to related descriptions of the following scenario 1.

In another possible implementation, the CSI reporting configuration of the reference signal may indicate that the CSI corresponding to the reference signal is reported aperiodically. In this case, the network device may schedule, by using downlink control information (downlink control information, DCI), the terminal to report the CSI corresponding to the reference signal.

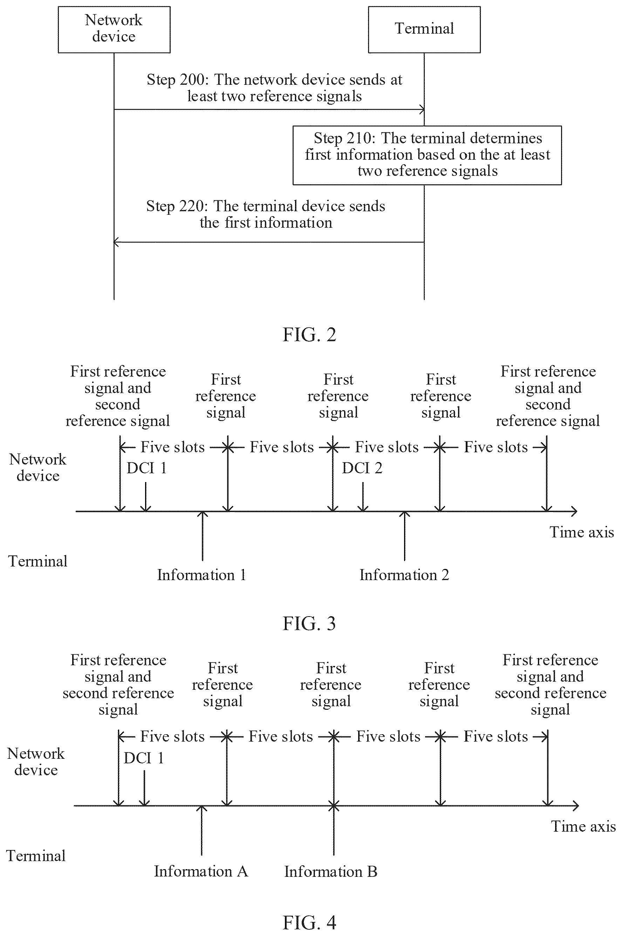

FIG. 2 shows an example of a possible schematic flowchart of a channel state information determining method according to an embodiment of this application. As shown in FIG. 2, the method includes the following steps.

Step 200: A network device sends at least two reference signals. Correspondingly, a terminal receives the at least two reference signals.

It should be understood that the at least two reference signals include two or more CSI-RSs.

Step 210: The terminal determines first information based on the at least two reference signals. The first information indicates that a part or all of information in CSI corresponding to a second reference signal is determined based on a first reference signal. The first reference signal and the second reference signal belong to the at least two reference signals. In other words, the at least two reference signals include the first reference signal and the second reference signal.

In a possible implementation, when a quantity of the at least two reference signals is large, the terminal may further first group the at least two reference signals, and then determine, based on at least one group of reference signals obtained through grouping, whether a part or all of information in CSI corresponding to a reference signal included in each group can be determined based on another reference signal. Each group of reference signals may include two reference signals. For example, each of the at least one group of reference signals obtained through grouping satisfies the following conditions.

Condition 1: An absolute value of a difference between sending time points of the two reference signals is less than or equal to a first preset threshold.

For any reference signal, a sending time point of the reference signal may be determined based on a sending periodicity and a slot offset of the reference signal.

For example,

$$\left( N_{\text{slot}}^{\text{frame},\mu} n_{\text{f}} + n_{\text{s,f}}^{\mu} - T_{\text{offset}} \right) \bmod T_{\text{CSI-RS}} = 0$$

$N_{\text{slot}}^{frame,u}$ is a quantity of slots in one frame, $n_{\text{f}}$ is a

frame sequence number, and $n_{\text{s,f}}^{u}$ is a slot sequence number in one frame. $N_{\text{slot}}^{frame,u} n_{\text{f}} + n_{\text{s,f}}^{u}$ may be understood as a total slot sequence number, $T_{\text{offset}}$ is the slot offset of the reference signal, and $T_{\text{CSI-RS}}$ is the sending periodicity of the reference signal.

Further, the network device sends the reference signal in a slot determined based on the frame sequence number and the slot sequence number that satisfy the foregoing formula.

In a possible design, the two reference signals have a same sending time point. In other words, the difference between the sending time points of the two reference signals is 0. That the two reference signals have a same sending time point may be understood as that the network device sends the two reference signals in a same slot. In other words, the two reference signals have a same sending slot. Alternatively, it may also be described as that the network device sends the two reference signals in a same time unit.

For example, the terminal may obtain a sending periodicity and a slot offset of the first reference signal and a sending periodicity and a slot offset of the second reference signal based on configuration information of the at least two reference signals. For example, the sending periodicity of the first reference signal is five slots, the slot offset is zero slots, the sending periodicity of the second reference signal is 20 slots, and the slot offset is zero slots. It can be learned that the network device simultaneously sends the first reference signal and the second reference signal every 20 slots. In this case, a sending time point of the first reference signal is the same as a sending time point of the second reference signal. Therefore, the first reference signal and the second reference signal are a group of reference signals that satisfy the condition 1.

In another possible design, the difference between the sending time points of the two reference signals is less than or equal to the first preset threshold. For example, the first preset threshold may be one slot or two slots. This is not limited in this application.

For example, if the sending periodicity of the first reference signal is five slots, the slot offset is zero slots, the sending periodicity of the second reference signal is 20 slots, and the slot offset is one slot, a difference between a sending time point of the first reference signal and a sending time point of the second reference signal is equal to one slot. Therefore, the first reference signal and the second reference signal are a group of reference signals that satisfy the condition 1.

Condition 2: An absolute value of a difference between frequencies of the two reference signals is less than or equal to a second preset threshold.

The frequency of the reference signal may also be described as a frequency band in which the reference signal is located, or a center frequency of a frequency band in which the reference signal is located. For example, the center frequency of the frequency band in which the reference signal is located is 2.6 GHz or 3.5 GHz.

For example, in a process in which the terminal accesses the network device, the terminal determines a frequency band for communicating with the network device. After the terminal accesses the network device, the network device may notify the terminal to perform communication on more frequency bands. Further, the network device may separately send reference signals on a plurality of different frequency bands, and correspondingly, the terminal may separately receive the corresponding reference signals on the plurality of different frequency bands.

For example, when an absolute value of a difference between a frequency of the first reference signal and a frequency of the second reference signal is less than or equal to the second preset threshold, the first reference signal and the second reference signal are a group of reference signals that satisfy the condition 2. The difference between the frequency of the first reference signal and the frequency of the second reference signal is a difference between a center frequency of a frequency band in which the first reference signal is located and a center frequency of a frequency band in which the second reference signal is located. The second preset threshold may be 1 GHz. This is not limited in this application.

In a possible implementation, the frequency of the first reference signal may be less than the frequency of the second reference signal. Alternatively, the frequency of the first reference signal may be greater than or equal to the frequency of the second reference signal.

It should be noted that the at least one group of reference signals obtained through grouping may satisfy both the condition 1 and the condition 2, or may satisfy the condition 1 or the condition 2. The condition 1 and the condition 2 are merely examples, and there may be another condition. This is not limited in this application.

For example, when the terminal determines that the first reference signal and the second reference signal satisfy the condition 1 and/or the condition 2, the terminal may determine a correlation parameter of the first reference signal and the second reference signal, compare the correlation parameter with a preset threshold, and determine, based on a comparison result, whether the part or all of the information in the CSI corresponding to the second reference signal can be determined based on the first reference signal. In addition, if it is determined, based on the comparison result, that the part or all of the information in the CSI corresponding to the second reference signal can be determined based on the first reference signal, correspondingly, a part or all of the information in CSI corresponding to the first reference signal can also be determined based on the second reference signal. An example in which the part or all of the information in the CSI corresponding to the second reference signal can be determined based on the first reference signal is merely used for description below.

The first reference signal and the second reference signal in the at least two reference signals are merely used as an example below to describe specific calculation methods for the correlation parameter of the first reference signal and the second reference signal.

Manner 1

The terminal measures the first reference signal based on the sending periodicity of the first reference signal, and measures the second reference signal based on the sending periodicity of the second reference signal. Further, the terminal obtains channel measurement matrices obtained by separately measuring the first reference signal and the second reference signal at T same moments, and the channel measurement matrices may be specifically represented as $H_{1,t}$ and $H_{2,t}$, where t=1, 2, ..., T. T is a positive integer. $H_{1,t}$ represents a channel measurement matrix obtained by measuring the first reference signal at a $t^{th}$ moment, and $H_{2,t}$ represents a channel measurement matrix obtained by measuring the second reference signal at the $t^{th}$ moment. $H_{1,t}$ is a column vector of $N_1 \times 1$, the absolute value of the difference between the center frequency of the frequency band in which the first reference signal is located and the center frequency of the frequency band in which the second reference signal is located is less than or equal to the second preset threshold, $H_{2,t}$ is a column vector of $N_2 \times 1$, and $N_1$ and $N_2$ are both positive integers. $H_{1,t}$ and $H_{2,t}$ may be obtained by performing channel estimation on a measurement result of the first reference signal, and $H_{2,t}$ may be obtained by performing channel estimation on a measurement result of the second reference signal.

For example, $H_{1,t} = Y_{1,t} X_{1,t}^{-1}$. $Y_{1,t}$ is a received signal corresponding to the first reference signal, and $X_{1,t}$ is a sending pilot corresponding to the first reference signal.

For example, it is assumed that the sending periodicity of the first reference signal is five slots, the slot offset of the first reference signal is zero slots, the sending periodicity of the second reference signal is 20 slots, and the slot offset of the second reference signal is zero slots. In this case, the terminal may simultaneously receive the first reference signal and the second reference signal every 20 slots. When simultaneously receiving the first reference signal and the second reference signal, the terminal records the channel measurement matrix obtained by measuring the first reference signal and the channel measurement matrix obtained by measuring the second reference signal.

Further, the terminal may calculate R based on $H_{1,t}$ and $H_{2,t}$, where $R = \frac{1}{T}\sum_{t=1}^{T} H_t H_t^H$. $H_t = [H_{1,t}; H_{2,t}]$, Ht, t=1, 2, ..., T is T column vectors whose lengths are $N_1 + N_2$, and $H_t^H$ is conjugate transposition of Ht. Then, the terminal performs singular value decomposition on R, to obtain ($N_1 + N_2$) eigenvalues corresponding

to R, and determines U based on eigenvectors respectively corresponding to first K largest eigenvalues in the $(N_1 + N_2)$ eigenvalues, where U is a matrix of $(N_1 + N_2) \times K$, K is a positive integer less than or equal to $N_1$, a value of K may be determined by the terminal based on a calculation capability or predefined by a protocol, and each column in U is one eigenvector.

Further, it is assumed that, at a $(T+1)^{th}$ moment, the terminal obtains $H_{1,T+1}$ by measuring the first reference signal and obtains $H_{2,T+1}$ by measuring the second reference signal. The $(T+1)^{th}$ moment is a moment at which the network device simultaneously sends the first reference signal and the second reference signal. The terminal may calculate $C_{T+1} = U_1^\dagger H_{1,T+1}$ based on $H_{1,T+1}$ and U, where $C_{T+1}$ is a column vector with a length K, $U_1^\dagger$ is a pseudo-inverse of $U_1$, and $U_1$ is a matrix formed by first $N_1$ rows of U. Then, the terminal may calculate $H_{T+1} = UC_{T+1}$ based on $C_{T+1}$ and U, mark a column vector formed by last $N_2$ elements in the column vector $H_{T+1}$ as $h_{2,T+1}$, and calculate a correlation coefficient c1 of $h_{2,T+1}$ and $H_{2,T+1}$, where

$$c1 = \frac{|H_{2,T+1}^H h_{2,T+1}|}{\sqrt{(H_{2,T+1}^H H_{2,T+1})(h_{2,T+1}^H h_{2,T+1})}}$$ . The correlation

coefficient c1 of $h_{2,T+1}$ and $H_{2,T+1}$ may also be referred to as a correlation coefficient of the first reference signal and the second reference signal.

Further, if the correlation coefficient of the first reference signal and the second reference signal is greater than a preset threshold 0.8, the terminal determines that channel quality information (channel quality indication, CQI) corresponding to the second reference signal can be obtained based on the first reference signal; or if the correlation coefficient of the first reference signal and the second reference signal is greater than a preset threshold 0.9, the terminal determines that a precoding matrix indicator (precoding matrix indicator, PMI) corresponding to the second reference signal can be obtained based on the first reference signal; or if the correlation coefficient of the first reference signal and the second reference signal is greater than a preset threshold 0.95, the terminal determines that all information in the CSI corresponding to the second reference signal can be obtained based on the first reference signal.

It may be understood that a larger correlation coefficient of the first reference signal and the second reference signal indicates higher reliability or accuracy of determining, based on the first reference signal, the CSI corresponding to the second reference signal; and a smaller correlation coefficient indicates lower reliability or accuracy of determining, based on the first reference signal, the CSI corresponding to the second reference signal. 0.8, 0.9, and 0.95 are merely examples, and are not intended to limit this application. In an actual application, the preset threshold may be changed based on factors such as a radio environment.

Manner 2

The terminal calculates a correlation coefficient c2 of $H_{1,t}$ and $H_{2,t}$, where c2 = $\frac{|H_{2,t}^H H_{1,t}|}{\sqrt{(H_{2,t}^H H_{2,t})(H_{1,t}^H H_{1,t})}}$, to obtain T c2 values, and averages the obtained T c2 values. For $H_{1,t}$ and $H_{2,t}$, refer to related descriptions in the foregoing manner 1. An average value of the T c2 values may also be referred to as a correlation coefficient of the first reference signal and the second reference signal.

If a length of a column vector of $H_{1,t}$ is different from a length of a column vector of $H_{2,t}$, that is, $N_1 \neq N_2$, even selection may be performed on a column vector with a longer length, to calculate the c2 value. It may be understood that a specific selection manner is not limited in this application.

For example, if the length of the column vector of $H_{1,t}$ is 8, and the length of the column vector of $H_{2,t}$ is 32, the $1^{st}$, $5^{th}$, $9^{th}$, $13^{th}$, $17^{th}$, $21^{st}$, $25^{th}$, and $29^{th}$ elements in each column of $H_{2,t}$ are used to form a new column vector $H'_{2,t}$, to calculate $c2 = \frac{|H'^H_{2,t}H_{1,t}|}{\sqrt{(H'^H_{2,t}H'_{2,t})(H_{1,t}^H H_{1,t})}}$ .

Similar to the foregoing manner 1, a larger correlation coefficient of the first reference signal and the second reference signal indicates higher reliability or accuracy of determining, based on the first reference signal, the CSI corresponding to the second reference signal; and a smaller correlation coefficient indicates lower reliability or accuracy of determining, based on the first reference signal, the CSI corresponding to the second reference signal.

Manner 3

The terminal calculates a covariance matrix correlation coefficient c3 of $H_{1,t}$ and $H_{2,t}$, where

$$c3 = \frac{|R_{12}|_F}{|R_{11}|_F + |R_{22}|_F}$$ . $R_{12} = \frac{1}{T}\sum_{t=1}^{T} H_{1,t}H_{2,t}^H$ , and

$R_{12}$ is a cross-covariance matrix of $H_{1,t}$ and $H_{2,t}$.

$$R_{11} = \frac{1}{T}\sum_{t=1}^{T} H_{1,t}H_{1,t}^H$$ and

$$R_{22} = \frac{1}{T}\sum_{t=1}^{T} H_{2,t}H_{2,t}^H$$ are respectively autocovariance matrices of $H_{1,t}$ and $H_{2,t}$, and $|\cdot|_F$ is a matrix F-norm. The covariance matrix correlation coefficient c3 of $H_{1,t}$ and $H_{2,t}$ may also be referred to as a correlation coefficient of the first reference signal and the second reference signal. For $H_{1,t}$ and $H_{2,t}$, refer to related descriptions in the foregoing manner 1.

Further, if the correlation coefficient of the first reference signal and the second reference signal is greater than a preset threshold 1/4, the terminal determines that CQI corresponding to the second reference signal can be obtained based on the first reference signal;

or if the correlation coefficient of the first reference signal and the second reference signal is greater than a preset threshold 1/3, the terminal determines that a PMI corresponding to the second reference signal can be obtained based on the first reference signal; or if the correlation coefficient of the first reference signal and the second reference signal is greater than a preset threshold 2/5, the terminal determines that all information in the CSI corresponding to the second reference signal can be obtained based on the first reference signal.

It may be understood that a larger correlation coefficient of the first reference signal and the second reference signal indicates higher reliability or accuracy of determining, based on the first reference signal, the CSI corresponding to the second reference signal; and a smaller correlation coefficient indicates lower reliability or accuracy of determining, based on the first reference signal, the CSI corresponding to the second reference signal. The preset thresholds 1/4, 1/3, and 2/5 are merely examples, and are not intended to limit this application. In an actual application, the preset threshold may be changed based on factors such as a radio environment.

It may be understood that the foregoing manner 1 to manner 3 are applicable to any two of the at least two reference signals. In other words, the terminal may determine, in any one of the foregoing manners, whether a part or all of information in CSI corresponding to a reference signal in the at least two reference signals can be determined based on another reference signal.

In addition, the foregoing manner 1 to manner 3 are merely examples and are not intended to limit this application, and the foregoing thresholds are merely examples. The foregoing manner 1 to manner 3 are described by using an example in which the first reference signal and the second reference signal have a same sending time point. In addition, for a case in which the absolute value of the difference between the sending time point of the first reference signal and the sending time point of the second reference signal is less than the first preset threshold, the foregoing manner 1 to manner 3 may also be used.

Further, in a possible implementation, the terminal may further send the correlation coefficient of the first reference signal and the second reference signal to the network device. For example, the correlation coefficient of the first reference signal and the second reference signal may be included in the first information, or may be separately sent. This is not limited in this application.

Step 220: The terminal device sends the first information.

For example, the terminal device sends the first information to the network device. Correspondingly, the network device receives the first information from the terminal device.

The following describes possible implementations of the first information.

In a possible implementation, when the first information indicates that a part of information in the CSI corresponding to the second reference signal is determined based on the first reference signal, the first information may further include an identifier of the part of the information in the CSI corresponding to the second reference signal, or the part of the information in the CSI corresponding to the second reference signal is indicated by using a bitmap (bitmap). For example, the part of the information in the CSI corresponding to the second reference signal includes at least one of CQI, a PMI, or a rank indicator (rank indicator, RI). It may be understood that the CQI, the PMI, and the RI are respectively identifiers of different parts of information in the CSI.

It may be understood that if the first information does not include the identifier of the part of the information in the CSI corresponding to the second reference signal, it indicates that all information in the CSI corresponding to the second reference signal can be determined based on the first reference signal.

In addition, in a possible implementation, a range of the part of the information in the CSI corresponding to the second reference signal may be further determined by using a network device indication, a protocol predefinition, or the like. For example, the network device may indicate, to the terminal, or predefine, by using a protocol, that the part of the information in the CSI corresponding to the second reference signal includes the PMI. In this case, the terminal sends the first information, and reports, by using 1 bit, whether the PMI corresponding to the second reference signal can be determined based on the first reference signal. In this case, the terminal may not consider whether the CQI, the RI, and the like corresponding to the second reference signal can be determined based on the first reference signal, and only determine whether the PMI corresponding to the second reference signal can be determined based on the first reference signal.

For another example, the network device may indicate, to the terminal, or predefine, by using a protocol, that the part of the information in the CSI corresponding to the second reference signal includes the PMI and the CQI. In this case, the terminal sends the first information, and reports, by using 2 bits, whether the PMI and the CQI corresponding to the second reference signal can be determined based on the first reference signal. In this case, the terminal may not consider whether the RI and the like corresponding to the second reference signal can be determined based on the first reference signal, and only determine whether the PMI and the CQI corresponding to the second reference signal can be determined based on the first reference signal.

In a possible implementation, when the quantity of the at least two reference signals is greater than 2, the first information may include information used for identifying the first reference signal and information used for identifying the second reference signal.

For example, the at least two reference signals include a reference signal 1, a reference signal 2, a reference signal 3, and a reference signal 4. If the terminal determines that a part of information in CSI corresponding to the reference signal 1 can be determined based on the reference signal 3, CSI corresponding to the reference signal 2 can be determined based only on the reference signal 2, CSI corresponding to the reference signal 3 can be determined based only on the reference signal 3, and CSI corresponding to the reference signal 4 can be determined based only on the reference signal 4, the first information may further include an identifier of the reference signal 1 and an identifier of the reference signal 3.

In a possible implementation, when the quantity of the at least two reference signals is 2, the first information may include indication information, indicating whether a part or all of information in CSI corresponding to one of the two reference signals can be determined based on the other reference signal. For example, if sending periodicities of the two reference signals are different, the indication information may be 1 bit. When a value of the bit is "1", it indicates that CSI corresponding to a reference signal with a longer sending periodicity in the at least two reference signals can be determined based on a reference signal with a shorter sending periodicity. When a value of the bit is "0", it indicates that CSI corresponding to a reference signal with a longer sending periodicity in the at least two reference signals cannot be determined based on a reference signal with a shorter sending periodicity. Alternatively, if frequencies of the two reference signals are different, the indication information may be 1 bit. When a value of the bit is "1", it indicates that CSI corresponding to a reference signal with a higher frequency in the at least two reference signals can be determined based on a reference signal with a lower frequency. When a value of the bit is "0", it indicates that CSI corresponding to a reference signal with a higher frequency in the at least two reference signals cannot be determined based on a reference signal with a lower frequency.

It may be understood that the foregoing implementations are merely examples and are not intended to limit this application.

In addition, in a possible implementation, before step 210, the network device may further send second information to the terminal. The second information indicates the terminal to feed back the first information. Further, the terminal determines the first information based on the at least two reference signals in response to the second information.

For example, the second information may be included in the configuration information of the at least two reference signals, or may be separately sent. This is not limited in this application. For example, the second information may occupy 1 bit. When a value of the bit is "1", it indicates that the terminal is indicated to feed back the first information. When a value of the bit is "0", it indicates that the terminal does not need to feed back the first information. A bit domain occupied by the second information may be a newly added bit domain, or reuse an existing bit domain. This is not limited in this application.

That the second information indicates the terminal to feed back the first information may also be described as follows: The second information indicates the terminal to determine whether CSI corresponding to any one of the at least two reference signals can be determined based on another reference signal.

According to the foregoing method, the network device sends the at least two reference signals, and after the terminal receives the at least two reference signals, if the terminal determines that the part or all of the information in the CSI corresponding to the second reference signal can be determined based on the first reference signal, the terminal sends the first information to the network device. If the terminal determines that the part or all of the information in the CSI corresponding to the second reference signal can be determined based on the first reference signal, the terminal may be enabled to update, by measuring only the first reference signal, CSI of an antenna port corresponding to the first reference signal and a part or all of CSI of an antenna port corresponding to the second reference signal. In other words, the terminal does not need to update the CSI corresponding to the second reference signal each time after measuring the second reference signal. Therefore, according to the foregoing method, the terminal can be enabled to update and report the CSI more efficiently, so that efficiency of updating the CSI by the terminal based on the reference signal is improved, and the network device can schedule CSI reporting more frequently, thereby alleviating aging of the CSI corresponding to the second reference signal and improving system performance. Correspondingly, in the foregoing method, the network device can be enabled to schedule, based on the sending periodicity of the first reference signal after receiving the first information, the terminal to report the part or all of the information in the CSI corresponding to the second reference signal, and does not need to wait for sending the second reference signal each time before scheduling the terminal to report updated CSI corresponding to the second reference signal. Therefore, according to the foregoing method, the network device can be enabled to obtain the CSI more efficiently.

Generally, the at least two reference signals configured by the network device have different sending periodicities, and a reference signal with a longer sending periodicity is more likely to have a CSI aging problem. CSI aging may also be referred to as CSI expiration, and means that for a reference signal with a long sending periodicity, a reporting periodicity of CSI corresponding to the reference signal is also long, or it takes long time to schedule the CSI corresponding to the reference signal for feedback. Consequently, the network device cannot obtain valid CSI in time, and system performance is affected.

In this application, the sending periodicity of the first reference signal may be greater than, less than, or equal to the sending periodicity of the second reference signal.

For example, the first reference signal is sent in slot 0, slot 10, slot 20, and slot 30, and the second reference signal is sent in slot 0, slot 15, and slot 30. In this case, the sending periodicity (which is 10 slots) of the first reference signal is less than the sending periodicity (which is 15 slots) of the second reference signal. When the part or all of the information in the CSI corresponding to the second reference signal can be determined based on the first reference signal, the terminal may determine, based on the first reference signal received in slot 10, the part or all of the information in the CSI corresponding to the second reference signal, to alleviate CSI aging in slot 10 to slot 15, and/or the terminal may determine, based on the first reference signal received in slot 20, the part or all of the information in the CSI corresponding to the second reference signal, to alleviate CSI aging in slot 20 to slot 30.

For another example, the first reference signal is sent in slot 0, slot 15, and slot 30, and the second reference signal is sent in slot 0, slot 10, slot 20, and slot 30. In this case, the sending periodicity (which is 15 slots) of the first reference signal is less than the sending periodicity (which is 10 slots) of the second reference signal. When the part or all of the information in the CSI corresponding to the second reference signal can be determined based on the first reference signal, the terminal may determine, based on the first reference signal received in slot 15, the part or all of the information in the CSI corresponding to the second reference signal, to alleviate CSI aging in slot 15 to slot 20.

Therefore, according to the foregoing method, when the part or all of the information in the CSI corresponding to the second reference signal can be determined based on the first reference signal, aging of the CSI corresponding to the second reference signal is alleviated, and system performance is improved.

When the sending periodicity of the first reference signal is less than or equal to the sending periodicity of the second reference signal, the following further describes, with reference to two different scenarios, how to resolve a CSI aging problem, to increase a CSI reporting frequency of a long CSI reporting periodicity and alleviate CSI aging.

In the following scenario 1, the CSI corresponding to the second reference signal is reported periodically. In the following scenario 2, the CSI corresponding to the second reference signal is reported aperiodically. For the scenario 1 and the scenario 2, the CSI corresponding to the first reference signal may be reported periodically or reported aperiodically. This is not limited in this application.

Scenario 1: The CSI corresponding to the second reference signal is reported periodically.

For example, after the terminal sends the first information, the terminal may send, based on a third periodicity, the part or all of the information in the CSI corresponding to the second reference signal. Correspondingly, the network device may receive, based on the third periodicity, the part or all of the information in the CSI corresponding to the second reference signal. It may be understood that the part or all of the information in the CSI corresponding to the second reference signal is determined by the first reference signal. In addition, when a part of information in the CSI corresponding to the second reference signal can be determined based on the first reference signal, the terminal sends, based on a second periodicity, a part of information that is in the CSI corresponding to the second reference signal and that is not indicated by the first information. Correspondingly, the network device receives, based on the second periodicity, the part of the information that is in the CSI corresponding to the second reference signal and that is not indicated by the first information.

The third periodicity is greater than or equal to a first periodicity and is less than the second periodicity, the first periodicity is the sending periodicity of the first reference signal or a CSI reporting periodicity in a CSI reporting configuration of the first reference signal, and the second periodicity is a CSI reporting periodicity in a CSI reporting configuration of the second reference signal. The second periodicity is greater than or equal to the sending periodicity of the second reference signal. Herein, the CSI reporting periodicity in the CSI reporting configuration of the first reference signal is greater than or equal to the sending periodicity of the first reference signal.

In a possible scenario, if the CSI reporting configuration of the second reference signal includes one CSI reporting periodicity, the CSI reporting periodicity is greater than or equal to the sending periodicity of the second reference signal, and the CSI reporting periodicity is the second periodicity. In this case, the terminal may determine the third periodicity, and notify the network device by using the first information. For example, the first information may further include the third periodicity, or a difference between the third periodicity and the first periodicity, or a difference between the third periodicity and the second periodicity. In addition, the foregoing content may not be carried in the first information, but may be separately sent. This is not limited in this application. The terminal may determine the third periodicity based on the correlation coefficient of the first reference signal and the second reference signal. For example, when the correlation coefficient of the first reference signal and the second reference signal is larger, the third periodicity is closer to the first periodicity, and the difference between the third periodicity and the first periodicity is smaller, or the third periodicity may be equal to the first periodicity.

For example, the sending periodicity of the first reference signal is five slots, the CSI reporting configuration of the first reference signal includes one CSI reporting periodicity, and the CSI reporting periodicity is also five slots. The sending periodicity of the second reference signal is 20 slots, the CSI reporting configuration of the second reference signal includes one CSI reporting periodicity, and the CSI reporting periodicity is 20 slots. When the part or all of the information in the CSI corresponding to the second reference signal can be determined based on the first reference signal, the terminal determines that the third periodicity is greater than or equal to five slots and less than 20 slots. The terminal may send a specific value of the third periodicity (for example, five slots, 10 slots, or 15 slots) to the network device, or the difference between the third periodicity and the first periodicity (where for example, if the difference between the third periodicity and the first periodicity is five slots, the third periodicity is 10 slots), or the difference between the third periodicity and the second periodicity (where for example, if the difference between the third periodicity and the second periodicity is five slots, the third periodicity is 15 slots).

In another possible scenario, if the CSI reporting configuration of the second reference signal includes a plurality of CSI reporting periodicities, the CSI reporting configuration of the second reference signal may further include the third periodicity. In other words, the plurality of CSI reporting periodicities include the second periodicity and the third periodicity. The third periodicity is less than the sending periodicity of the second reference signal. In other words, when the part or all of the information in the CSI corresponding to the second reference signal can be determined based on another signal (for example, the first reference signal), the terminal may send, by using the CSI reporting periodicity less than the sending periodicity of the second reference signal, the part or all of the information in the CSI corresponding to the second reference signal. The CSI reporting periodicity less than the sending periodicity of the second reference signal is greater than or equal to a sending periodicity of the another reference signal.

If there is one CSI reporting periodicity less than the sending periodicity of the second reference signal, the terminal may not need to notify the network device of the CSI reporting periodicity less than the sending periodicity of the second reference signal.

If there are a plurality of CSI reporting periodicities less than the sending periodicity of the second reference signal, the terminal may select, based on the sending periodicity of the another reference signal, one CSI reporting periodicity from the plurality of CSI reporting periodicities less than the sending periodicity of the reference signal, and may notify the network device of the selected CSI reporting periodicity.

An example in which the part or all of the information in the CSI corresponding to the second reference signal is determined based on the first reference signal is used.

Example 1: It is assumed that the sending periodicity of the second reference signal is 20 slots. If the CSI reporting configuration of the second reference signal includes CSI reporting periodicities, the CSI reporting periodicities include 20 slots and five slots. The 20 slots are a default CSI reporting periodicity, and the five slots are a CSI reporting periodicity that may be used. The CSI reporting periodicity that may be used is applicable to the following scenario: When the part or all of the information in the CSI corresponding to the second reference signal can be determined based on the first reference signal, and the sending periodicity of the first reference signal is five slots, the part or all of the information in the CSI corresponding to the second reference signal may be reported in the periodicity of five slots.

Example 2: It is assumed that the sending periodicity of the second reference signal is 20 slots. If the CSI reporting configuration of the second reference signal includes CSI reporting periodicities, the CSI reporting periodicities include 20 slots, 10 slots, and five slots. The 20 slots are a default CSI reporting periodicity, and the 10 slots and the five slots are CSI reporting periodicities that may be used. When the part or all of the information in the CSI corresponding to the second reference signal can be determined based on the first reference signal, and the sending periodicity of the first reference signal is 10 slots, the terminal may select, based on the sending periodicity of the first reference signal being 10 slots, 10 slots from the 10 slots and the five slots included in the CSI reporting periodicities as the CSI reporting periodicity of the part or all of the information in the CSI corresponding to the second reference signal.

In still another possible scenario, after the network device receives the first information, the network device reconfigures a CSI reporting periodicity, that is, the third periodicity, for the second reference signal, and the network device sends the third periodicity to the terminal.

According to the foregoing design, the network device can obtain the part or all of the information in the CSI corresponding to the second reference signal for a plurality of times in time, and does not need to wait for sending the second reference signal each time before obtaining a part or all of information in updated CSI corresponding to the second reference signal. In other words, the terminal does not need to report the CSI each time after measuring the second reference signal. In this way, the reporting periodicity of the part or all of the information in the CSI corresponding to the second reference signal can be shortened, so that aging of the CSI corresponding to the second reference signal can be alleviated, and system performance is improved.

Scenario 2: The CSI corresponding to the second reference signal is reported aperiodically

For example, after receiving the first information, the network device may receive the part or all of the information in the CSI corresponding to the second reference signal at least twice. Time points of the at least two receptions of the part or all of the information in CSI corresponding to the second reference signal are all between time points of two adjacent times of sending of the second reference signal, and the part or all of the information in the CSI corresponding to the second reference signal differs in the at least two receptions.

A receiving time of the part or all of the information in the CSI corresponding to the second reference signal may be understood as a time at which the foregoing information is received, or may be understood as a time at which the foregoing information is received minus Z', where Z' is a CSI calculation time specified in a protocol.

Correspondingly, the terminal may send the part or all of the information in the CSI corresponding to the second reference signal at least twice. Time points of the at least two times of sending of the part or all of the information in CSI corresponding to the second reference signal are all between time points of two adjacent times of sending of the second reference signal, and the part or all of the information in the CSI corresponding to the second reference signal differs in the at least two times of sending.

In a possible implementation, the part or all of the information in the CSI that is corresponding to the second reference signal and that is received by the network device at least twice is obtained through aperiodic scheduling.

For example, the network device may send fourth information 1, where the fourth information 1 is used for requesting the part or all of the information in the CSI corresponding to the second reference signal. For example, the fourth information 1 may be DCI 1. The part or all of the information in the CSI corresponding to the second reference signal that is sent by the terminal for the first time based on the fourth information 1 is denoted as the part or all of the information 1 in the CSI corresponding to the second reference signal.

The network device may further send fourth information 2, where the fourth information 2 is used for requesting the part or all of the information in the CSI corresponding to the second reference signal. For example, the fourth information 2 may be DCI 2. The part or all of the information in the CSI corresponding to the second reference signal that is sent by the terminal for the second time based on the fourth information 2 is denoted as the part or all of the information 2 in the CSI corresponding to the second reference signal.

A sending time point of a part or all of the information 1 in the CSI corresponding to the second reference signal and the sending time point of the part or all of the information 1 in the CSI corresponding to the second reference signal are both between time points of two adjacent times of sending of the second reference signal, and the part or all of the information 1 in the CSI corresponding to the second reference signal is different from the part or all of the information 2 in the CSI corresponding to the second reference signal.

For example, as shown in FIG. 3, it is assumed that the sending periodicity of the first reference signal is five slots, the slot offset of the first reference signal is zero slots, the sending periodicity of the second reference signal is 20 slots, and the slot offset of the second reference signal is zero slots, the terminal may simultaneously receive the first reference signal and the second reference signal every 20 slots. After the terminal simultaneously receives the first reference signal and the second reference signal at a specific time, the terminal receives the DCI 1, where the DCI 1 is used for requesting the part or all of the information in the CSI corresponding to the second reference signal. The terminal sends, based on the previously received second reference signal, the part or all of the information in the CSI corresponding to the second reference signal, and the information is denoted as information 1. If the terminal further receives the DCI 2 after receiving the DCI 1, the DCI 2 is used for requesting the part or all of the information in the CSI corresponding to the second reference signal. If a next sending time point of the second reference signal of the network device is not reached in this case, but the terminal receives a new first reference signal, the terminal may determine, based on the new first reference signal and a previous measurement result of the received first reference signal and the received second reference signal, the part or all of the information in the CSI corresponding to the second reference signal, and send the part or all of the information in the CSI corresponding to the second reference signal again, where the information is denoted as information 2.

In another possible implementation, the part or all of the information in the CSI that is corresponding to the second reference signal and that is received by the network device at least twice may include the part or all of the information in the CSI that is corresponding to the second reference signal and that is obtained through aperiodic scheduling, and may further include the part or all of the information in the CSI that is corresponding to the second reference signal and that is reported in the second periodicity. In this case, the CSI corresponding to the second reference signal may be reported periodically, or may be reported aperiodically.

For example, as shown in FIG. 4, it is assumed that the sending periodicity of the first reference signal is five slots, the slot offset of the first reference signal is zero slots, the sending periodicity of the second reference signal is 20 slots, the slot offset of the second reference signal is zero slots, and the CSI reporting configuration of the second reference signal includes that the CSI reporting periodicity is 20 slots and the slot offset is 10 slots, the terminal may simultaneously receive the first reference signal and the second reference signal every 20 slots, in addition, the terminal periodically sends the CSI corresponding to the second reference signal, where a moment at which the terminal sends the CSI corresponding to the second reference signal each time is 10 slots after the network device sends the second reference signal each time.

After the terminal simultaneously receives the first reference signal and the second reference signal at a specific time and before a moment at which the network device sends the second reference signal next time, the terminal receives the DCI 1, where the DCI 1 is used to request a part or all of information in CSI corresponding to the second reference signal, and the terminal sends, in response to the DCI 1, the part or all of the information in the CSI corresponding to the second reference signal, where the information is denoted as information A. In addition, the terminal further sends, based on the CSI reporting configuration of the second reference signal, the part or all of the information in the CSI corresponding to the second reference signal, where the information is denoted as information B, and the information A is different from the information B.

According to the foregoing design, the network device can obtain the part or all of the information in the CSI corresponding to the second reference signal in time, and does not need to wait for sending the second reference signal each time before scheduling the terminal to report updated CSI corresponding to the second reference signal, thereby alleviating aging of the CSI corresponding to the second reference signal and improving system performance.

For example, the following method is a possible implementation in which the terminal determines, based on the first reference signal, the part or all of the information in the CSI corresponding to the second reference signal. It should be noted that the following manner is merely an example and is not intended to limit this application.

The terminal first determines U. For details, refer to related descriptions in the foregoing manner 1.

When the CSI corresponding to the second reference signal can be determined based on the first reference signal, the terminal may measure the first reference signal at a moment t' to obtain $H_{1,t'}$. The moment t' is a sending moment of the first reference signal, and is not a sending moment of the second reference signal.

The terminal calculates $C_{t'} = U_1^\dagger H_{1,t'}$ based on $H_{1,t'}$ and U, where Ct, is a column vector of a length K, $U_1^\dagger$ is a pseudo-inverse of a matrix $U_1$, and $U_1$ is a matrix formed by the first $N_1$ row of U. Further, based on Ct, and U, the terminal may calculate Ht, $= UC_{t'}$, and denotes the last $N_2$ elements in each column of Ht, as $h_{2,t'}$. $h_{2,t'}$ is an inference value of $H_{2,t'}$. In other words, the terminal cannot measure and obtain the second reference signal at a moment t' and obtain $H_{2,t'}$ because the network device does not send the second reference signal. However, the terminal may calculate an inference value of $H_{2,t'}$, that is, $h_{2,t'}$, based on U and the first reference signal measured at the moment t'. In this way, the terminal may determine, based on an existing CSI calculation method, the CSI corresponding to the second reference signal.

In addition, in a possible implementation, the terminal may further send a correlation coefficient of the first reference signal and the second reference signal to the network device, but does not send the first information, so that the network device determines, based on the preset threshold, whether the part or all of the information in the CSI corresponding to the second reference signal can be determined based on the first reference signal. When the network device determines that the part or all of the information in the CSI corresponding to the second reference signal can be determined based on the first reference signal, the network device may send third information to the terminal. The third information is similar to the first information.

It may be understood that, to implement the functions in the foregoing embodiments, the network device and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

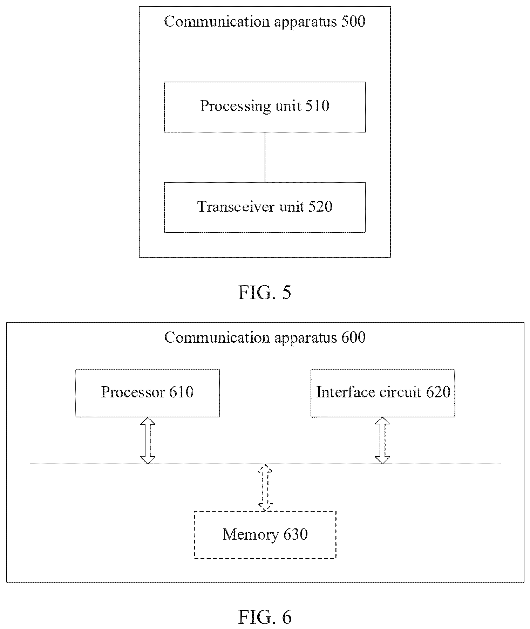

FIG. 5 and FIG. 6 are diagrams of structures of possible communication apparatuses according to embodiments of this application. These communication apparatuses may be configured to implement a function of the terminal or the network device in the foregoing method embodiments, and therefore can also implement beneficial effect of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 5, a communication apparatus 500 includes a processing unit 510 and a transceiver unit 520. The communication apparatus 500 is configured to implement a function of the terminal or the network device in the method embodiment shown in FIG. 2.

When the communication apparatus 500 is configured to implement the function of the network device in the method embodiment shown in FIG. 2, the processing unit 510 invokes the transceiver unit 520 to send at least two reference signals; and receives first information. The first information indicates that a part or all of information in channel state information CSI corresponding to a second reference signal is determined based on a first reference signal. The first reference signal and the second reference signal belong to the at least two reference signals, and a sending periodicity of the first reference signal is less than a sending periodicity of the second reference signal.

In a possible design, the transceiver unit 520 is configured to receive, based on a third periodicity after receiving the first information, the part or all of the information in the CSI corresponding to the second reference signal. The third periodicity is greater than or equal to a first periodicity and is less than a second periodicity. The first periodicity is the sending periodicity of the first reference signal or a CSI reporting periodicity in a CSI reporting configuration of the first reference signal, and the second periodicity is a CSI reporting periodicity in a CSI reporting configuration of the second reference signal.

In a possible design, the CSI reporting configuration of the second reference signal further includes the third periodicity.

In a possible design, the first information further indicates the third periodicity, or a difference between the third periodicity and the first periodicity.

In a possible design, the transceiver unit 520 is configured to receive, based on the second periodicity after receiving the first information, a part of the information that is in the CSI corresponding to the second reference signal and that is not indicated by the first information.

In a possible design, the transceiver unit 520 is configured to: when the CSI corresponding to the second reference signal is reported aperiodically, receive, after receiving the first information, the part or all of the information in the CSI corresponding to the second reference signal at least twice. Time points of the at least two receptions are all between time points of two adjacent times of sending of the second reference signal, and the part or all of the information in the CSI corresponding to the second reference signal differs in the at least two receptions.

In a possible design, when the first information indicates the part of the information in the CSI corresponding to the second reference signal, the first information further includes an identifier of the part of the information in the CSI corresponding to the second reference signal. The part of the information in the CSI corresponding to the second reference signal includes at least one of channel quality information CQI, a precoding matrix indicator PMI, or a rank indicator RI.

In a possible design, the transceiver unit 520 is configured to send configuration information of the at least two reference signals before sending the at least two reference signals. The configuration information of the at least two reference signals includes the sending periodicity of the first reference signal and the sending periodicity of the second reference signal.

In a possible design, the transceiver unit 520 is configured to send second information before receiving the first information. The second information indicates the terminal to feed back the first information.

In a possible design, an absolute value of a difference between a sending time point of the first reference signal and a sending time point of the second reference signal is less than or equal to a first preset threshold.

In a possible design, an absolute value of a difference between a frequency of the first reference signal and a frequency of the second reference signal is less than or equal to a second preset threshold.

In a possible design, the frequency of the first reference signal is less than the frequency of the second reference signal.

When the communication apparatus 500 is configured to implement the function of the terminal in the method embodiment shown in FIG. 2, the transceiver unit 520 is configured to receive at least two reference signals; and the processing unit 510 is configured to determine first information based on the at least two reference signals. The first information indicates that a part or all of information in CSI corresponding to a second reference signal is determined based on a first reference signal, and the first reference signal and the second reference signal belong to the at least two reference signals. The transceiver unit 520 is configured to send the first information.

In a possible design, the transceiver unit 520 is configured to send, based on a third periodicity after sending the first information, the part or all of the information in the CSI corresponding to the second reference signal. The third periodicity is greater than or equal to a first periodicity and is less than a second periodicity. The first periodicity is a sending periodicity of the first reference signal or a CSI reporting periodicity in a CSI reporting configuration of the first reference signal, and the second periodicity is a CSI reporting periodicity in a CSI reporting configuration of the second reference signal.

In a possible design, the CSI reporting configuration of the second reference signal further includes the third periodicity.

In a possible design, the first information further indicates the third periodicity, or a difference between the third periodicity and the first periodicity.

In a possible design, the transceiver unit 520 is configured to send the part of the information that is in the CSI corresponding to the second reference signal and that is not indicated by the first information based on the second periodicity after sending the first information.

In a possible design, the transceiver unit 520 is configured to: when the CSI corresponding to the second reference signal is reported aperiodically, send, after sending the first information, the part or all of the information in the CSI corresponding to the second reference signal of at least twice. Time points of the at least two times of sending are all between time points of two adjacent times of sending of the second reference signal, and a part or all of the information in the CSI corresponding to the second reference signal differs in the at least two times of sending.

In a possible design, when the first information indicates the part of the information in the CSI corresponding to the second reference signal, the first information further includes an identifier of the part of the information in the CSI corresponding to the second reference signal. The part of the information in the CSI corresponding to the second reference signal includes at least one of channel quality information CQI, a precoding matrix indicator PMI, or a rank indicator RI.

In a possible design, the transceiver unit 520 is configured to receive configuration information of the at least two reference signals before receiving the at least two reference signals. The configuration information of the at least two reference signals includes the sending periodicity of the first reference signal and the sending periodicity of the second reference signal.

In a possible design, the transceiver unit 520 is configured to receive second information before sending the first information. The second information indicates the terminal to feed back the first information.

In a possible design, an absolute value of a difference between a sending time point of the first reference signal and a sending time point of the second reference signal is less than or equal to a first preset threshold.

In a possible design, an absolute value of a difference between a frequency of the first reference signal and a frequency of the second reference signal is less than or equal to a second preset threshold.

In a possible design, the frequency of the first reference signal is less than the frequency of the second reference signal.

For more detailed descriptions about the processing unit 510 and the transceiver unit 520, directly refer to related descriptions in the method embodiment shown in FIG. 2. Details are not described herein again.

As shown in FIG. 6, a communication apparatus 600 includes a processor 610 and an interface circuit 620. The processor 610 and the interface circuit 620 are coupled to each other. It can be understood that the interface circuit 620 may be a transceiver or an input/output interface. Optionally, the communication apparatus 600 may further include a memory 630, configured to store instructions executed by the processor 610, store input data for the processor 610 to run instructions, or store data generated after the processor 610 runs instructions.

When the communication apparatus 600 is configured to implement the method shown in FIG. 2, the processor 610 is configured to implement the function of the processing unit 510, and the interface circuit 620 is configured to implement the function of the transceiver unit 520.

When the communication apparatus is a chip used in a terminal, the chip in the terminal implements a function of the terminal in the foregoing method embodiment. The chip in the terminal receives information from another module (for example, a radio frequency module or an antenna) in the terminal, where the information is sent by a network device to the terminal. Alternatively, the chip in the terminal sends information to another module (for example, the radio frequency module or the antenna) in the terminal, where the information is sent by the terminal to the network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The network device module herein may be a baseband chip of the network device, or may be a DU or another module. The DU herein may be a DU in an open radio access network (open radio access network, O-RAN) architecture.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 6, the communication apparatus 600 includes one processor 610 and one memory 630. The processor 610 is coupled to the memory 630. The memory 630 stores instructions. When the instructions stored in the memory 630 are executed by the processor 610, the communication apparatus 600 performs the method performed by the network device or the terminal in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or a part of procedures or functions in embodiments of this application are executed. The computer may be a general-purpose computer, a special-purpose computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A channel state information determining method, wherein the method comprises:

   sending at least two reference signals; and
   receiving first information, wherein the first information indicates that a part or all of information in channel state information CSI corresponding to a second reference signal is determined based on a first reference signal, the first reference signal and the second reference signal belong to the at least two reference signals, and a sending periodicity of the first reference signal is less than a sending periodicity of the second reference signal.

2. The method according to claim 1, wherein after receiving the first information, the method further comprises:

   receiving, based on a third periodicity, the part or all of the information in the CSI corresponding to the second reference signal, wherein the third periodicity is greater than or equal to a first periodicity and is less than a second periodicity, the first periodicity is the sending periodicity of the first reference signal or a CSI reporting periodicity in a CSI reporting configuration of the first reference signal, and the second periodicity is a CSI reporting periodicity in a CSI reporting configuration of the second reference signal.

3. The method according to claim 2, wherein the CSI reporting configuration of the second reference signal further comprises the third periodicity.

4. The method according to claim 2, wherein the first information further indicates the third periodicity, or a difference between the third periodicity and the first periodicity.

5. The method according to any one of claims 2 to 4, wherein after receiving the first information, the method further comprises:
receiving, based on the second periodicity, a part of information that is in the CSI corresponding to the second reference signal and that is not indicated by the first information.

6. The method according to claim 1, wherein when the CSI corresponding to the second reference signal is reported aperiodically, after receiving the first information, the method further comprises:

receiving the part or all of the information in the CSI corresponding to the second reference signal at least twice, wherein

time points of the at least two receptions are all between time points of two adjacent times of sending of the second reference signal, and the part or all of the information in the CSI corresponding to the second reference signal differs in the at least two receptions.

7. The method according to any one of claims 1 to 6, wherein when the first information indicates a part of information in the CSI corresponding to the second reference signal, the first information further comprises an identifier of the part of the information in the CSI corresponding to the second reference signal, and the part of the information in the CSI corresponding to the second reference signal comprises at least one of channel quality information CQI, a precoding matrix indicator PMI, or a rank indicator RI.

8. The method according to any one of claims 1 to 7, wherein before sending the at least two reference signals, the method further comprises:
sending configuration information of the at least two reference signals, wherein the configuration information of the at least two reference signals comprises the sending periodicity of the first reference signal and the sending periodicity of the second reference signal.

9. The method according to any one of claims 1 to 8, wherein before receiving the first information, the method further comprises:
sending second information, wherein the second information indicates a terminal to feed back the first information.

10. The method according to any one of claims 1 to 9, wherein an absolute value of a difference between a sending time point of the first reference signal and a sending time point of the second reference signal is less than or equal to a first preset threshold.

11. The method according to any one of claims 1 to 10, wherein an absolute value of a difference between a frequency of the first reference signal and a frequency of the second reference signal is less than or equal to a second preset threshold.

12. The method according to any one of claims 1 to 11, wherein the frequency of the first reference signal is less than the frequency of the second reference signal.

13. A channel state information determining method, wherein the method comprises:

receiving at least two reference signals;
determining first information based on the at least two reference signals, wherein the first information indicates that a part or all of information in CSI corresponding to a second reference signal is determined based on the first reference signal, and the first reference signal and the second reference signal belong to the at least two reference signals; and
sending the first information.

14. The method according to claim 13, wherein after sending the first information, the method further comprises:

sending, based on a third periodicity, the part or all of the information in the CSI corresponding to the second reference signal, wherein
the third periodicity is greater than or equal to a first periodicity and is less than a second periodicity, the first periodicity is a sending periodicity of the first reference signal or a CSI reporting periodicity in a CSI reporting configuration of the first reference signal, and the second periodicity is a CSI reporting periodicity in a CSI reporting configuration of the second reference signal.

15. The method according to claim 14, wherein the CSI reporting configuration of the second reference signal further comprises the third periodicity.

16. The method according to claim 14, wherein the first information further indicates the third periodicity, or a difference between the third periodicity and the first periodicity.

17. The method according to any one of claims 14 to 16, wherein after sending the first information, the method further comprises:
sending, based on the second periodicity, a part of information that is in the CSI corresponding to the second reference signal and that is not indicated by the first information.

18. The method according to claim 13, wherein when the CSI corresponding to the second reference signal is reported aperiodically, after sending the first information, the method further comprises:

sending the part or all of the information in the CSI corresponding to the second reference signal at least twice, wherein time points of the at least two times of sending are all between time points of two adjacent times of sending of the second reference signal, and the part or all of the information in the CSI corresponding to the second reference signal differs in the at least two times of sending.

**19.** The method according to any one of claims 13 to 18, wherein when the first information indicates a part of information in the CSI corresponding to the second reference signal, the first information further comprises an identifier of the part of the information in the CSI corresponding to the second reference signal, and the part of the information in the CSI corresponding to the second reference signal comprises at least one of CQI, a PMI, or a RI.

**20.** The method according to any one of claims 13 to 19, wherein before receiving the at least two reference signals, the method further comprises: receiving configuration information of the at least two reference signals, wherein the configuration information of the at least two reference signals comprises the sending periodicity of the first reference signal and a sending periodicity of the second reference signal.

**21.** The method according to any one of claims 13 to 20, wherein before sending the first information, the method further comprises: receiving second information, wherein the second information indicates a terminal to feed back the first information.

**22.** The method according to any one of claims 13 to 21, wherein an absolute value of a difference between a sending time point of the first reference signal and a sending time point of the second reference signal is less than or equal to a first preset threshold.

**23.** The method according to any one of claims 13 to 22, wherein an absolute value of a difference between a frequency of the first reference signal and a frequency of the second reference signal is less than or equal to a second preset threshold.

**24.** The method according to any one of claims 13 to 23, wherein the frequency of the first reference signal is less than the frequency of the second reference signal.

**25.** A communication apparatus, comprising a unit or a module configured to perform the method according to any one of claims 1 to 12, or comprising a unit or a module configured to perform the method according to any one of claims 13 to 24.

**26.** A communication apparatus, comprising one or more processors and one or more memories, wherein the one or more memories store one or more programs, and when the program is executed by the one or more processors, the apparatus is caused to perform the method according to any one of claims 1 to 12 or the method according to any one of claims 13 to 24.

**27.** A chip system, wherein the chip system comprises at least one chip and a memory, and the at least one chip is configured to read and execute a program stored in the memory, to implement the method according to any one of claims 1 to 12 or the method according to any one of claims 13 to 24.

**28.** A readable storage medium, wherein the readable storage medium comprises a program, and when the program is run on an apparatus, the apparatus is caused to perform the method according to any one of claims 1 to 12 or the method according to any one of claims 13 to 24.

**29.** A computer program product comprising instructions, wherein when the instructions are run on a computer, the computer is caused to perform the method according to any one of claims 1 to 12 or the method according to any one of claims 13 to 24.

FIG. 1

```
┌──────────┐                              ┌──────────┐
│ Network  │                              │ Terminal │
│ device   │                              │          │
└────┬─────┘                              └────┬─────┘
     │                                         │
     │  Step 200: The network device sends at  │
     │         least two reference signals     │
     │────────────────────────────────────────▶│
     │                                         │
     │           ┌─────────────────────────────┴──────┐
     │           │ Step 210: The terminal determines   │
     │           │ first information based on the at   │
     │           │ least two reference signals         │
     │           └─────────────────────────────┬──────┘
     │     Step 220: The terminal device sends  │
     │            the first information          │
     │◀─────────────────────────────────────────│
     │                                         │
```

FIG. 2

FIG. 3

FIG. 4

Communication apparatus 500

Processing unit 510

Transceiver unit 520

FIG. 5

Communication apparatus 600

Processor 610

Interface circuit 620

Memory 630

FIG. 6

## INTERNATIONAL SEARCH REPORT

| International application No. |
| --- |
| **PCT/CN2024/102074** |

**A. CLASSIFICATION OF SUBJECT MATTER**

H04B7/0413(2017.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 第一, 第二, 信道状态信息, 信道质量信息, 预编码矩阵指示, 秩指示, 比较, 对比, 比对, 计算, CSI, CQI, PMI, RI, first, second, channel state information, channel quality indication, precoding matrix indicator, compare, calculate

**C. DOCUMENTS CONSIDERED TO BE RELEVANT**

| Category* | Citation of document, with indication, where appropriate, of the relevant passages | Relevant to claim No. |
| --- | --- | --- |
| X | CN 109155695 A (HUAWEI TECHNOLOGIES CO., LTD.) 04 January 2019 (2019-01-04) description, pages 8-26, and figures 1-9 | 1-29 |
| X | WO 2022236635 A1 (GUANGDONG OPPO MOBILE COMMUNICATIONS CO., LTD.) 17 November 2022 (2022-11-17) claims 1-102, and figures 1-11 | 1-29 |
| A | CN 107734538 A (ZTE CORP.) 23 February 2018 (2018-02-23) entire document | 1-29 |
| A | US 2021218442 A1 (HUAWEI TECHNOLOGIES CO., LTD.) 15 July 2021 (2021-07-15) entire document | 1-29 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 September 2024** | **24 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102074**

| Patent document cited in search report | | | Publication date (day/month/year) | Patent family member(s) | | | Publication date (day/month/year) |
|---|---|---|---|---|---|---|---|
| CN | 109155695 | A | 04 January 2019 | BR | 112018073440 | A2 | 26 March 2019 |
| | | | | US | 2019081683 | A1 | 14 March 2019 |
| | | | | US | 10742294 | B2 | 11 August 2020 |
| | | | | JP | 2019521570 | A | 25 July 2019 |
| | | | | JP | 6731497 | B2 | 29 July 2020 |
| | | | | WO | 2017193404 | A1 | 16 November 2017 |
| | | | | KR | 20190007475 | A | 22 January 2019 |
| | | | | EP | 3451565 | A1 | 06 March 2019 |
| | | | | EP | 3451565 | A4 | 31 July 2019 |
| WO | 2022236635 | A1 | 17 November 2022 | CN | 116918424 | A | 20 October 2023 |
| CN | 107734538 | A | 23 February 2018 | WO | 2018028536 | A1 | 15 February 2018 |
| | | | | EP | 3499778 | A1 | 19 June 2019 |
| | | | | EP | 3499778 | A4 | 15 April 2020 |
| US | 2021218442 | A1 | 15 July 2021 | EP | 3852280 | A1 | 21 July 2021 |
| | | | | EP | 3852280 | A4 | 01 December 2021 |
| | | | | WO | 2020062265 | A1 | 02 April 2020 |
| | | | | US | 11303328 | B2 | 12 April 2022 |

Form PCT/ISA/210 (patent family annex) (July 2022)

**EP 4 716 105 A1**

**Patent documents cited in the description**

- CN 202310798320